Europäisches Patentamt

European Patent Office

Office européen des brevets

(11) Publication number: **0 529 712 A1**

# EUROPEAN PATENT APPLICATION

(21) Application number: **92202440.1**

(51) Int. Cl.5: **A21D 8/04**

(22) Date of filing: **07.08.92**

(30) Priority: **23.08.91 EP 91307805**

(43) Date of publication of application:
**03.03.93 Bulletin 93/09**

(84) Designated Contracting States:
**AT BE CH DE DK ES FR GB GR IE IT LI NL PT SE**

(71) Applicant: **OUEST INTERNATIONAL B.V.**
**Huizerstraatweg 28**
**NL-1411 GP Naarden(NL)**

(72) Inventor: **van Duynhoven, Antonius Adrianus G.**
**Parallelweg 24**
**NL-4845 CR Wagenberg(NL)**
Inventor: **Laane, Nicolaas Charles M.**
**Julianalaan 28**
**NL-1412 GS Naarden(NL)**
Inventor: **Moonen, Johannes Hubertus E.**
**Ester de Boer van Rijklaan 23**
**NL-3584 GL Utrecht(NL)**
Inventor: **Schmedding, Diederik Johannes M.**
**Schout 83**
**NL-1412 NC Naarden(NL)**

(74) Representative: **Hartong, Richard Leroy et al**
**Unilever N.V. Patent Division P.O. Box 137**
**NL-3130 AC Vlaardingen (NL)**

(54) **Enzyme containing baking improver.**

(57) The invention is based on the fact that the enzyme $\beta$-mannanase surprisingly retards the staling of baked goods like bread etc. as well as improves the dough properties (dough tolerance). On account of this effect upon the quality of baked goods, $\beta$-mannanase may partially or probably completely replace conventional baking additives like sodium stearoyl lactylate (SSL) and bromate ($KBrO_3$). The enzyme $\beta$-mannanase may be applied in baked goods together with other enzymes.

EP 0 529 712 A1

**Field of the invention**:

The present invention relates to baking improvers comprising a specific enzyme, its use in flour and dough as well as to a method for improving the properties of dough and baked goods prepared thereof. The improvements relate to retarding the staling and improving the crumb structure of baked goods, as well as to improving dough consistency.

**Background of the invention**

The problem of staling of baked goods is of considerable economic importance to the consumer as well as to the baking industry. Since a major criterion in the selection of baked goods is based on soft texture, losses due to customer rejection because of staling or perceived staling of baked goods are extensive. The term "baked goods" is herein to be understood to comprise bread products such as tin bread, loaves of bread, french bread as well as rolls, cakes, pies, muffins, yeast raised and cake doughnuts and the like.

Staling of baked goods such as bread is perceived by a firming of the crumb and loss of pleasant "freshly baked aroma". Staling begins immediately after baking and continues as the bread ages. Staling is thought to be the result of retrogradation of cooked starch and changes in gluten after baking. Stored baked goods become firmer in texture even though the water content of packaged bread does not differ significantly from fresh bread. In practice, unsold loaves of bread are removed from the supermarket shelves the day after delivery. These loaves of bread may then only be used for making rusk or in animal feed.

In view of this, many papers have been published by cereal chemists and bakery technologists dealing with additives for baking products which compensate for the natural variability of components present in flour and improve the quality of baked goods. Initial work concentrated on the use of chemical additives, usually emulsifiers and surfactants like monoglycerides (glycerol monostearate GMS) and stearoyl lactylates (sodium salt: SSL) or a bromate like $KBrO_3$. The addition of GMS to bread makes it softer but the rate of staling remains nearly the same. On the other hand, the addition of SSL has a pronounced positive effect on the rate of staling (Adv. in Cereal Science & Technology, Vol. 6, pages 119-266, Schuster, G. et al., 1984).

The above-mentioned phenomenon of staling of baked goods such as bread is very complex and not completely understood. The term "staling" refers to all changes that occur after baking, with the exception of microbial spoilage. These changes include hardening of the crumb and an increase in toughness of the crust but also loss of flavour. Most literature deals only with the first phenomenon, whereas crust toughness and flavour loss are generally only briefly mentioned. To illustrate the complexity of staling, a number of parameters will be mentioned which influence the sensory perception and analytical evaluation of staling. Firmness, i.e. hardening of the crumb, is mostly used to monitor staling and is affected by the structure of the crumb (a small or large cell structure with a thick or thin cell wall), moisture content and resilience of the crumb. Therefore components for improving baked goods which are mainly added to improve e.g. specific volume, like xylanase (pentosanase), will also affect the staling properties due to their effect on crumb structure (bread volume).

Most papers and patents dealing with anti-staling agents relate to the retrogradation of starch (more particularly the amylopectin fraction of starch) which is the main component in wheat flour (starch contents of about 70 %). Starch molecules start to swell or gelatinize during baking at about 60°C. Upon cooling the starch molecules tend to form crystals again. This phenomenon is called "retrogradation". Crystallization of amylose, the linear polymeric starch fraction, is quite rapid and is needed to some extent to give bread its final structure.

The first enzyme shown to have some anti-staling properties was $\alpha$-amylase. This enzyme is generally present in flour but due to several effects (season, type of wheat, harvest variation, etc.) the activity varies significantly. Already in 1953 an article was published by Miller B.S. et al., in Food Technology, Vol. 7, pages 38-42 wherein amylase enzymes from cereals, bacteria, and moulds were compared. The idea behind the enzymatic treatment was that the enzyme degrades starch thereby not only decreasing starch complex formation (crystallization) but also decreasing the complex (crystal) size. Concerning the influence of the several types of $\alpha$-amylase the following is reported.

- Cereal $\alpha$-amylases have a temperature optimum of about 70°C at a pH of about 6. This means that the enzyme is still active in the baking process for some time after starch has been gelatinized. A commercial source for this enzyme, which may be added to wheat flour is malted barley. However, this source of $\alpha$-amylase is poorly characterized and leads to unreproducible products on account of its natural variations.

- In US Patent 2,615,810 the use of a thermostable bacterial $\alpha$-amylase was proposed. Despite the fact that softening of the crumb was observed this approach was deserted since it became known that the crumbs turned "gummy" after some time. This problem was ascribed to the fact that the bacterial enzyme was active too long as it was not completely inactivated during baking. A "thermolabile" bacterial $\alpha$-amylase is claimed by Grampp et. al. (Canadian patent No. 880,703).

Another alternative is the use of a fungal $\alpha$-amylase (ex Aspergillus spp). However, this enzyme has the drawback that its optimum temperature is about 50°C, i.e. well below the gelatinising temperature of starch (60°C). On account of this property fungal $\alpha$-amylase may hardly be functional in anti-staling as this kind of $\alpha$-amylase is active only on the damaged starch fraction (5-10% of all starch) and is inactivated before the main part of the starch is gelatinized to a sufficient extent. A modification of the fungal $\alpha$-amylase approach has been disclosed in US patent 4,416,903 according to which the enzyme is protected by dispersing it into a concentrated sugar solution. A further modification is disclosed in WO 89/08403 wherein an acid stable microbial $\alpha$-amylase enzyme which can be derived from fungi such as black Aspergilli is proposed. This acid-stable microbial $\alpha$-amylase retards the staling of baked goods to some extent without causing gumminess of the baked goods.

As indicated in Food Technology, June 1990, page 129 retrogradation of amylopectin, the branched fraction of starch, is much slower than the retrogradation of amylose and is thought to be responsible for the "longer term" firming or staling of bread crumbs. All previous mentioned $\alpha$-amylases are not only active on amylose but also on the $\alpha$-1-4 linkages in amylopectin. The function of these enzymes is therefore the same as mentioned above, i.e. they act as an anti-staling ingredient.

In order to prevent amylopectin retrogradation, i.e. to prevent crystal formation and/or to limit crystal size, an enzyme which is able to split the $\alpha$-1-6 linkages in amylopectin would have the advantage of preventing the retrogradation. Use of such a type of enzyme would also have the advantage that enzyme activity will stop due to the limited number of bonds to be cleaved. Enzymes which act on these branching points are described as (microbial) pullulanases or (plant) limit dextranase (EC 3.2.1.41), iso-amylase (EC 3.2.1.68), amylo-1-6-D-glucosidase:4-$\alpha$-D-glucotransferase (EC 3.2.1.33:EC 2.4.1.25) and the exo enzyme amylo-1-6-D-glucosidase (EC3.2.1.33). Iso-amylase has a higher affinity for amylopectin than pullulanase has, however, the latter enzyme still reacts with amylopectin (Yokobayashi K. et al., Biochim. Biophys. Acta 293, pages 197-202, 1973). The glucosidase:transferase enzyme reacts slowly and incomplete with amylopectin and $\beta$-limit dextrins (Lee E.Y.C. et al., Arch. Biochem. Biophys. 143, pages 365-374, 1971) and seems therefore not very useful. The exo enzyme is not active on large side chains and has therefore no function in the prevention of retrogradation of amylopectin, although needed for the release of fermentable glucose.

The idea to add pullulanase in combination with a cereal or bacterial $\alpha$-amylase to wheat flour is disclosed in US patent 4,654,216. However, the thermostable $\alpha$-amylases remain active too long during baking and cause gumminess in the finished product.

Contrary to the above approach of using an $\alpha$-1-6 linkages splitting enzyme is the use of a branching enzyme, the so-called "Q enzyme" disclosed in US patent 4,454,161. However, the practical status of the method disclosed therein is not clear as both temperature and pH optima of the enzyme (25°C and pH = 7.5 respectively) do not look relevant for conditions in baking processes. Also the fact that the enzyme reacts with soluble amylose fragments, suggests that first of all $\alpha$-amylase should be active before this enzyme has sufficient substrate.

The beneficial effect of the enzyme glucose-oxidase on flour and dough has been disclosed in US 2,783,150 published in 1957.

Two other patents dealing with anti-staling enzymes are EP-A-0,109,244 and EP-A-0,132,289 claiming the use of phospholipase A (from pancreas) with or without a glutathione decomposing enzyme (from pig kidney). These enzymes need to be purified to remove off-flavours which makes them unattractive.

It is disclosed in Japanese patent application 60160833 that the addition of guar (a galactomannan) to flour results in improved properties of baked products.

In Table III in Advances in Cereal Science and Technology, Vol. VIII on page 222, it is shown that glucomannans are present in e.g. wheat endosperm up to only a few percent of the non-starchy material.

Disclosures describing treatment of food products with $\beta$-mannanase are dealing with coffee extracts (US-A 2,801,920, DE-A 2,063,489, JP 74012710) and fruit (juice) treatment (EP-A 96324).

## Summary of the invention

The invention relates to the use of $\beta$-mannanase as a baking improver as well as to flour and dough comprising a $\beta$-mannanase containing baking improver. The invention further relates to a method for improving the properties of dough as well as to a method for making baked goods having improved properties by baking said dough and to the baked goods obtainable by baking such a dough.

In practising the present invention the baking improvers comprising $\beta$-mannanase are employed as adjuncts to flour or dough and in bread improvers used for baking purposes.

## Detailed description of the invention

As disclosed hereinbefore, there are enzymes known to have some beneficial effect on the properties of dough and/or on the properties of the baked goods prepared thereof. There is, however, still a need for an enzyme or enzyme preparation having good anti-staling properties when used in the preparation of baked goods. It is therefore an object to provide such an enzyme.

It has been found that the use of a baking improver comprising the enzyme $\beta$-mannanase in the preparation of baked goods improves the properties of dough and of baked goods prepared thereof. With respect to the latter, the improvements relate to retarding the staling and improving the crumb structure of baked goods. Apart from reducing the staling and improving the crumb structure, the addition of $\beta$-mannanase to dough has the additional advantage that it improves the dough tolerance as well as the flexibility and stickiness of the dough which results in improved handling properties. A further benefit of the addition of $\beta$-mannanase to dough is that it can reduce the need for using conventional baking additives.

Therefore, the invention relates to a baking improver comprising $\beta$-mannanase. The term "baking improver" is herein to be understood to be a composition comprising at least one component which improves the properties of dough and/or of the baked goods prepared thereof in at least one respect.

The invention further relates to flour and dough comprising a baking improver according to the invention. Such a baking improver may be added to flour or dough at any stage of the process of preparing baked goods. The baking improver may be added as such or may be added as a part of any other ingredient like flour or as a part of an enzyme preparation or in admixture with other dough- or baking additives. The dough ready for baking thus will normally comprise flour, water and optionally yeast and the baking improver according to the invention. Flour is herein to be understood to comprise one or more of the following components: wheat-, barley- or rye flour as well as other farinaceous materials.

Although the $\beta$-mannanase may be the sole component of the baking improver, it may be preferred to have $\beta$-mannanase as a component of an enzyme preparation also comprising e.g. xylanase, glucose-oxidase and/or $\alpha$-amylase of vegetable, animal or microbial origin (including recombinant DNA organisms). The beneficial activity of glucose oxidase, of xylanase and of $\alpha$-amylase has been referred to above.

$\beta$-Mannanase may be incorporated in the flour or dough such that at least 1 GMU, preferably about 2-1000 GMU, and more preferably 10-1000 of $\beta$-mannanase is present in the flour or dough mixture, calculated per kg of flour. If one or more of the other enzymes as disclosed above are to be incorporated in the flour or dough, suitable amounts for these enzymes are:

$\alpha$-amylase: about 10-10,000 SKB,

glucose oxidase: about 1-1000 U,

xylanase: about $5 \times 10^3$-$500 \times 10^3$ U, all calculated per kg of flour.

The above mentioned enzyme units will be defined below.

Apart from the above indicated enzymes several other enzymes like proteases, amylo-glucosidases, $\beta$-amylases, lipoxygenases, peroxidases and sulfhydryl modifying enzymes like sulfhydryl oxidase may be incorporated in the baking improver. Further, also additives like emulsifiers etc. may be incorporated in the baking improver.

It was additionally found that the addition of a mannan degrading enzyme, particular $\beta$-mannanase, in the presence of added glucomannan and/or galactomannan polysaccharides such as guar, improves the properties of the dough and the baked products even further. Preferred amounts for the galactomannan or glucomannan polysaccharides in the flour or dough are up to 10% by weight calculated on the amount of flour, and more preferably 0.1-5% by weight, calculated on the amount of flour. It is possible to incorporate a gluco- or galactomannan polysaccharide in the baking improver comprising $\beta$-mannanase, but it is also possible to add such a mannan polysaccharide to the flour or dough separately from the $\beta$-mannanase containing baking improver.

The enzyme $\beta$-mannanase can be obtained from plant, animal or microbial sources which may have been altered by r-DNA techniques, but is preferably of bacterial or fungal origin. $\beta$-Mannanase according to the latter can be produced by fermentation of suitable microorganisms e.g. species of the genus Aspergillus, like Aspergillus niger.

The invention further relates to the use of $\beta$-mannanase as a baking improver as well as to the baked goods obtainable by baking a dough as described above.

The invention also provides a method for improving the properties of dough comprising flour, water and optionally yeast, by incorporating in the dough a baking improver as described above. The invention further provides a method for improving the properties of baked goods by baking a dough as described above.

Baked goods prepared by baking a dough according to the invention have good anti-staling properties and remain soft for longer as measured by a panimeter. Typical improvement in freshness is essentially achieved after about 3 days' storage compared with the reference as well as with baked goods whereto xylanase is added as an ingredient. Additional benefits of $\beta$-mannanase are reduced stickiness of the dough and a better dough tolerance resulting in improved handling properties of the dough.

Another benefit of the $\beta$-mannanase is its ability to reduce or even totally eliminate the need to add baking additives such as dough conditioners like bromate ($KBrO_3$) and sodium stearyl lactylate (SSL) and softening agents such as monoglycerides (glycerol monostearate = GMS).

EXPERIMENTAL

The activity of the enzymes $\beta$-mannanase, xylanase, $\alpha$-amylase, glucose-oxidase and $\alpha$-galactosidase is determined by the following assay methods:

**Measurement of the $\beta$-mannanase activity:**

The $\beta$-mannanase activity is determined by the following method. Substrate solution is made by dissolving 0.75 Konjac glucomannan, commercially available as Propol A (Shimizu), in acetate buffer at pH = 5 (0.1 M). To reach full viscosity, this solution is heated to 80°C for 20 minutes. The viscosity is measured with a Brookfield LVT model DV-II viscometer, using spindle 3 rotating with 6 rpm and at 40°C. The reaction is started by adding a $\beta$-mannanase containing enzyme preparation. The activity is calculated from the slope of the logarithm of viscosity (cps = mpa.s) as function of time (minutes). The amount of enzyme added should be chosen such that that viscosity does not decrease more than 15,000 cps in 10 minutes (equivalent with 0.78 GMU) or less than 3,000 cps in 10 minutes (equivalent with 0.079 GMU).

One glucomannanase unit (GMU) is the amount of enzyme added to the above reaction mixture which decreases viscosity with a factor 10 in 10 minutes. The dosage of the $\beta$-mannanase enzyme should at least be 1 GMU/kg of flour under the conditions mentioned.

**Measurement of the xylanase activity:**

Xylanase activity is determined by measuring the increase in reducing sugars according to the method using dinitrosalicylic acid (DNS) as disclosed in Dutch patent application 90.01388

One unit is defined as the amount of reducing sugar, expressed as $\mu$g xylose, released per minute. In the baking experiments for tin breads xylanase was added to obtain an activity of about 38,000 U/kg of flour.

**Measurement of the amylase activity:**

$\alpha$-Amylase activity is determined according to the modified SKB method described by Olson, Evans & Dickson (Cereal Chem. 21, 533, 1944). The principle is that starch forms a coloured complex with iodine, while $\alpha$-amylase degraded starch (dextrins) does not. In baking tests the activity was standardized to approximately 500 SKB/kg of flour.

**Measurement of the glucose-oxidase activity:**

Glucose-oxidase activity is determined by a method based on the oxidation of the dye o-dianisidine by means of $H_2O_2$ produced by the glucose-oxidase enzyme; this method has been described in the brochure of the used product "Sigma glucose-oxidase type V (no.6500)"

**Measurement of the $\alpha$-galactosidase activity:**

$\alpha$-Galactosidase activity is determined according to the method disclosed in Example 4.1 of EP-A 255,153.

**Measurement of bread freshness:**

Freshness of bread, is measured with a "panimeter" according to the method developed and described by TNO-IGMB (Institute of Cereal, Flour and Bread), the Netherlands. With this apparatus firmness as well as elasticity of the bread crumb can be determined. In our experiments a load weight of 300 grammes was used. Data presented are averages of 8 measurements (using 8 loaves) per day of which the highest and lowest values were discarded. Bread slices were always taken from the same part of the loaf.

Apart from measuring freshness with mechanical equipment, sensorial evaluations were also carried out by experienced test bakers.

**Example 1**

The improving effect of $\beta$-mannanase on wheat flour in bread making is shown. A (tin) bread was made according to the following recipe:

| Raw Materials | Gram |
|---|---|
| Flour T550* | 2000 |
| Water | 1200 |
| Baker's Yeast | 60 |
| Biobake 5304** | 0.1 |
| Salt | 40 |
| Ascorbic acid | 0.1 |
| Fat | 20 |

\* manufacturer Wessanen, the Netherlands;
\*\* $\alpha$-amylase as marketed by Quest International, the Netherlands

The mixture was processed as described below:

| Processing: | |
|---|---|
| Kneading machine: | "Kemper Spiral" |
| Kneading time: | 2 minutes low speed, 3 minutes high speed |
| Dough temperature: | 26 °C |
| Dough weight: | 400 g |
| "To round up": | by Hand |
| First proofing time: | 25 minutes |
| Moulder: | "Mono" moulder |
| Second proofing time: | 25 minutes |
| Final moulder: | "Mono" moulder |
| Final proofing: | 70 minutes, 32 °C, 80 % humidity |
| Baking: | 30 minutes at 240 °C |

In this experiment 1 as well as in experiment 2 reference loaves of bread were baked according to the above recipe (reference "d" in experiment 1 and reference "4" in experiment 2). Fungal $\alpha$-amylase, in these examples as Biobake 5304, is commonly used as a baking ingredient. Similar loaves of bread were baked having improvers added (items "a" to "d" in experiment 1 and items "1" to "4" in experiment 2). The $\beta$-mannanase used is substantially pure and appears in electrophoresis (PAGE) as one single band. The following improvers have been added:
a) 80,000 units of xylanase* + 188 GMU of $\beta$-mannanase**
b) 6 grams of Hymono 2233**(monoglyceride, 90 wt.%)

\* Dutch patent application 90,01388, example I.5.6

\*\* as marketed by Quest International, the Netherlands

6

c) 80,000 units of xylanase*

d) reference

Loaves of bread were stored enclosed in plastic in a temperature controlled cabinet at 25 °C and subjected to measurement with a panimeter as described above.

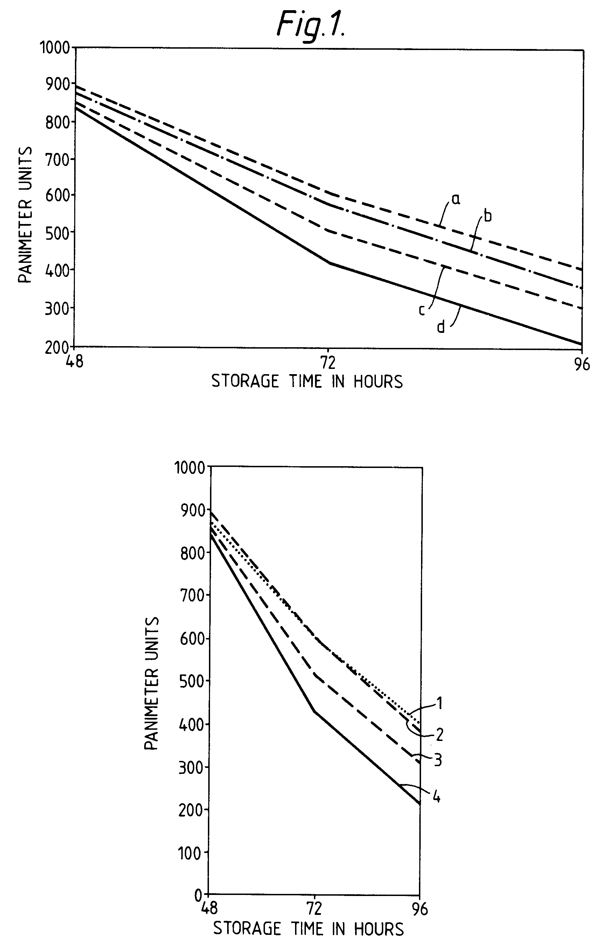

The results are shown in figure 1. The higher the number of panimeter units the better the attributed freshness of the bread. The lines a-d refer to the additives mentioned under a to d above. As derivable therefrom an improvement is seen when xylanase is added compared with the reference. Addition of Hymono 2233 shows an improvement compared to added xylanase, however an even better improvement on the firmness is observed when a combination of xylanase and $\beta$-mannanase is added.

**Example 2**

This example is performed as described in example 1 with the proviso that the following improvers have been added.

1) 80,000 units of xylanase* + 186 GMU of $\beta$-mannanase**

2) 80,000 units of xylanase* + 124 GMU of $\beta$-mannanase**

3) 80,000 units of xylanase*

4) reference

The results are shown in figure 2. The lines 1-4 refer to the type and amount of additive added as give above.

**Example 3**

This example is performed in the way described in Example 1 with the proviso that the following improvers have been used:

1) 77,000 units of xylanase* + 88 GMU of $\beta$-mannanase**

2) 77,000 units of xylanase*

The results obtained by sensorical evaluation are shown in Table A below. From this table it is clear that the addition of $\beta$-mannanase to the baking mixture (dough) as described herein results in improved dough consistency and anti-staling properties of the bread.

\* Dutch    patent    application    90,01388,    example    I.5.6

\*\* as marketed    Quest    International,    the    Netherlands.

\* Dutch    patent    application    90,01388,    example    I. 5.6

\*\* as marketed    by Quest    International,    the    Netherlands

EP 0 529 712 A1

14    R 3115 (R)

Table A

Effect of specific enzymes on
freshness (anti-staling) of bread

| Enzyme mixture applied in Baking | Activity (Units/kg of flour) | | | | Freshness after 72 hr (1 = best) (4 = worst) | Dough consistency (1 = best) (4 = worst) |
|---|---|---|---|---|---|---|
| | xylanase | α-amylase | β-mannanase | α-galactosidase | | |
| (1) xylanase + β-mannanase | 38500 | 500 | 44 | 0.2 | 1 | 1 |
| (2) xylanase | 38500 | 500 | 1.2 | 0.2 | 4 | 2 |

## Example 4

This example is performed in the way described in example 1 with the proviso that the following improvers have been added:

8

1. 78,000 units of xylanase* + 6 grams of guar** + 124 GMU of $\beta$-mannanase***
2. 78,000 units of xylanase* + 6 grams of Filgel P9155, guar**
3. 78,000 units of xylanase* + 124 GMU of $\beta$-mannanase***

The results of sensorial evaluations are shown in Table B below. Freshness and dough consistency are defined as in table A.

Tabel B

| Effects of guar and/or $\beta$-mannanase on freshness (anti-staling) of bread. | | | | |
|---|---|---|---|---|
| Improver | Activity Xylanase | (Units/kg flour) Mannanase | Freshness (after 96 h) | Dough consistency |
| No 1 | 39,000 | 62 | 1 | 2 |
| No 2 | 39,000 | - | 2 | 3 |
| No 3 | 39,000 | 62 | 1-2 | 1 |

From this table it is clear that the combination of the enzymes xylanase and $\beta$-mannanase with guar results in even better anti-staling properties of the bread than without the addition of guar. The addition of guar to the dough formulation gives rise to a more flexible dough than without. Similar results may be obtained when instead of guar other mannans are added to the baking mixture, such as glucomannan from konjac flour. Increasing the amount of mannan polysaccharides may result in an increased flexibility of dough. Too much flexibility can be undesired for some purposes and the addition of $\beta$-mannanase can (partly) compensate for this increased flexibility.

**Example 5**

The improving effect of using several enzymes on the characteristics of (wheat flour) dough is compared in this example with the additive bromate ($KBrO_3$). Crispy rolls were used because the effects on specific volume and dough consistency (and stability) are more pronounced/critical than with "tin" bread.

The following formulation and processing have been used to make the crispy rolls:

| Recipe: | |
|---|---|
| Materials | Gram |
| Flour (T550) | 1000 |
| Water | 600 |
| Baker's yeast | 40 |
| Salt | 20 |
| Ascorbic acid | 0,05 |
| Sucrose | 10 |

* Dutch patent application 90,01388, example I.5.6

** as marketed by Quest Int. the Netherlands

| Processing: | |
|---|---|
| Kneading machine: | Kemper Spiral |
| Kneading time: | 2 min. at low speed, 3 min. at high speed |
| Dough temperature: | 26°C |
| First proofing time: | 15 min. to round up |
| Second proofing time: | 15 min. to divide and round up |
| Rest proofing time: | 3 min. to shape German rolls |
| Final proofing time: | 50 or 65 minutes |
| Baking temperature: | 230°C (20 min) |

Sucrose was added in these tests to act as substrate for the enzyme glucose-oxidase (and yeast). The following improvers using the same enzymes as indicated in Example 1 have been added to the standard formulation described above:

1) 50 ppm $KBrO_3$ (reference)
2) 19,500 units of xylanase*
3) 19,500 units of xylanase* + 81 units of glucose-oxidase**(GOX)
4) 19,500 units of xylanase* + 62 GMU of $\beta$-mannanase**
5) 19,500 units of xylanase* + 81 units of GOX** + 62 GMU of $\beta$-mannanase**

The experiment has been carried out in such a way that in each test bromate was taken as a reference and the tests with the other improvers were carried out in duplicate or triplicate. After the initial kneading, 30 rolls were made and individually assessed on the following characteristics:

1. Dough consistency during processing
    1 = dry/stiff dough
    4 = flexible dough
2. Dough stability during transport to the oven (after final proofing time)
    -- unstable dough
    + + stable dough
3. Specific volume (SV) in % according to the rapeseed replacement method
4. Form (shape of the rolls)
    1 = very bad, no split, flat roll
    10 = very good, open split, round roll
The results are shown in Tabel C below:

Table C

| The effect of specific enzymes on dough and form of crispy rolls compared to bromate. | | | | | | |
|---|---|---|---|---|---|---|
| No. | Dough | | Form proofing time | | SV in % proofing time | |
| | consistency | stability | 50' | 65' | 50' | 65' |
| 1. $KBrO_3$ | 1 | - | 6 | 4 | 100 | 100 |
| 2. Xylanase | 4 | + | 7 | 5 | 104 | 103 |
| 3. Xylanase + G.O.X. | 2 | + | 7 | 5 | 106 | 105 |
| 4. Xylanase + $\beta$-mannanase | 3 | + | 7 | 5 | 106 | 105 |
| 5. Xylanase + $\beta$-mannanase + G.O.X. | 2 | + + | 7 | 6 | 107 | 107 |

From the results in Table C it is clear that xylanase gives an improvement in form, specific volume (SV) and dough stability but also more flexible doughs are obtained, compared to the $KBrO_3$ additive. By using glucose-oxidase on top of xylanase an improvement in specific volume (SV) and in dough consistency is achieved. By using $\beta$-mannanase on top of xylanase the same improvement as with glucose-oxidase and

* Dutch patent application, example I.5.6

** as marketed by Quest International, the Netherlands

xylanase are achieved, however, the dough is slightly more flexible.

As apparent from Table C the combination of $\beta$-mannanase and glucose-oxidase on top of xylanase gives the best improvement in dough consistency and stability, specific volume and form of the roll.

**Claims**

1.  Baking improver comprising an enzyme, characterized in that the enzyme is $\beta$-mannanase.

2.  Baking improver according to claim 1, characterized in that the $\beta$-mannanase is of bacterial or fungal origin.

3.  Baking improver according to claim 2, characterized in that the $\beta$-mannanase used is derived from an Aspergillus strain.

4.  Baking improver according to claim 3, characterized in that the $\beta$-mannanase used is derived from Aspergillus niger.

5.  Baking improver according to claim 1-4, characterized in that it further comprises $\alpha$-amylase, glucose oxidase, xylanase or mixtures thereof.

6.  Baking improver according to claim 1-5, characterized in that it further comprises a glucomannan or galactomannan polysaccharide.

7.  Baking improver according to claim 6, characterized in that the galactomannan is guar.

8.  Flour comprising a baking improver according to claim 1-7.

9.  Flour according to claim 8, characterized in that the $\beta$-mannanase is present in an amount of at least 1 GMU/kg of flour.

10. Flour according to claim 9, characterized in that the $\beta$-mannanase is present in an amount of 2-1000 GMU/kg of flour.

11. Flour according to claim 8-10, characterized in that the $\alpha$-amylase is present in an amount of 10-10,000 SKB/kg of flour.

12. Flour according to claim 8-11, characterized in that the glucose oxidase is present in an amount of 1-1000 U/kg of flour.

13. Flour according to claim 8-12, characterized in that the xylanase is present in an amount of $5\times10^3$-$500\times10^3$ U/kg of flour.

14. Dough comprising flour, water and a baking improver, characterized in that the baking improver is according to claim 1-7.

15. Dough comprising flour according to claim 8-13.

16. Dough according to claim 14-15, characterized in that it further comprises yeast.

17. Baked goods, characterized in that they are obtainable by baking a dough according to claim 14-16.

18. Use of $\beta$-mannanase as a baking improver.

19. A method for improving the properties of dough comprising flour, water and optionally yeast, characterized by incorporating in the dough a baking improver according to claim 1-7.

20. A method for improving the properties of baked goods, characterized by baking a dough according to claim 14-16.

# Fig.1.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | CARBOHYDRATE RESEARCH vol. 118, 1983, AMSTERDAM pages 91 - 109 MCCLEARY, B.V. & NURTHEN, E. 'Characteristics of the oligosaccharides produced on hydrolysis of galactomannan with beta-d- mannanase.' * page 93, paragraph 3 * | 1-4 | A21D8/04 |
| Y | | 6-7 | |
| P,Y | DATABASE WPIL Section Ch, Week 9207, Derwent Publications Ltd., London, GB; Class D, AN 92-051440 & JP-A-3 290 196 (MEIJI SEIKA KAISHA) 19 December 1991 * abstract * | 6-7 | |
| Y | US-A-3 512 992 (A. COOKE & H. JOHANNSON) * claims * * column 2, line 1 - column 3, line 30 * * column 6, line 38 - line 70 * | 1-20 | |
| Y | EP-A-0 396 162 (UNILEVER NV) * claims * | 1-20 | A21D |
| Y | DE-A-2 227 368 (RÖHM GMBH) * claims * | 1-20 | |
| Y | EP-A-0 338 787 (NABISCO BRANDS, INC.) * page 2, line 6 - page 3, line 56 * | 1-20 | |
| A | J. SCI. FOOD AGRIC. vol. 41, no. 1, 1987, GREAT BRITAIN pages 93 - 96 D.J. FOX ET AL. 'Glycosidases of Wheat.' | | |

TECHNICAL FIELDS SEARCHED (Int. Cl.5)

-/--

The present search report has been drawn up for all claims

| Place of search | Date of completion of the search | Examiner |
|---|---|---|
| THE HAGUE | 23 NOVEMBER 1992 | BEVAN S.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DATABASE WPIL<br>Section Ch, Week 9042,<br>Derwent Publications Ltd., London, GB;<br>Class B, AN 90-318293<br>& JP-A-2 229 117 (DAINIPPON PHARM KK.) 11 September 1990<br>* abstract *<br>--- | 1-7 | |
| D,A | DATABASE WPIL<br>Section Ch, Week 8540,<br>Derwent Publications Ltd., London, GB;<br>Class D, AN 85-245675<br>& JP-A-60 160 833 (MIYOSHI YUSHI KK.) 22 August 1985<br>* abstract *<br>----- | 6-7 | |
| | | | TECHNICAL FIELDS SEARCHED (Int. Cl.5) |

The present search report has been drawn up for all claims

| Place of search | Date of completion of the search | Examiner |
|---|---|---|
| THE HAGUE | 23 NOVEMBER 1992 | BEVAN S.R. |

EPO FORM 1503 03.82 (P0401)